# EUROPÄISCHE PATENTSCHRIFT

(11) **EP 0 370 590 B1**
(45) Veröffentlichungstag und Bekanntmachung des Hinweises auf die Patenterteilung: **26.05.1993**
(21) Anmeldenummer: 89250090.1
(22) Anmeldetag: 17.11.1989
(51) Int. Cl.: A61C 8/00

(54) **Enossales Implantat mit elastischem Zwischenelement und Metall-Distanzhülse**
Endosseous implant with elastic intermediate element and metal distance ring
Implant intra-osseux avec élément intermédiaire élastique et douille d'écartement en métal

(30) Priorität: 24.11.1988 DE 3839724; 23.03.1989 DE 3909580
(43) Veröffentlichungstag der Anmeldung: 30.05.1990
(73) Patentinhaber: IMZ-Fertigungs- und Vertriebsgesellschaft für dentale Technologie mbH, 70794 Filderstadt (DE); FRIATEC AG KERAMIK- UND KUNSTSTOFFWERKE, D-68229 Mannheim (DE)
(72) Erfinder: Dürr, Walter, D-7537 Remchingen (DE); Kirsch, Axel, Dr., D-7024 Filderstadt (DE)
(74) Vertreter: Goddar, Heinz J., Dr.

(56) Entgegenhaltungen:
- EP-A- 0 136 532
- EP-A- 0 216 031
- DE-A- 2 413 883

## Beschreibung

Die Erfindung betrifft ein enossales Implantat mit einen Befestigungskopf und einen mit einem Grundkörper verschraubbaren Implantatpfosten aus Metall aufweisenden Befestigungseinrichtungen für einen festsitzenden, bedingt abnehmbaren Zahnersatz, mit einer mit einem Zentrierbund versehenen, in das offene Ende des Grundkörpers einsetzbaren und mit einer Schulter an den oberen Rand des Grundkörpers anlegbaren Distanzhülse und einem den Implantatpfosten bereichsweise konzentrisch umgebenden Zwischenelement aus elastischem Material, wie Kunststoff.

Aus der EP-A-0 216 931 ist ein enossales Implantat dieser Art bekannt, bei dem die Distanzhülse eine oben und unten offene Bohrung aufweist und z. B. aus Kunststoff besteht. Das Zwischenelement ist unmittelbar in den Grundkörper eingesetzt und übernimmt, ggf. im Zusammenwirken mit der aus elastischem Material bestehenden Distanzhülse, das Abfedern des Befestigungskopfes bzw. des Zahnersatzes gegenüber dem Grundkörper in allen Richtungen , d. h. sowohl gegen vertikale als auch gegen seitlich wirkende Belastungen. Zusätzlich wird dabei eine elektrische Isolierung zwischen dem Zahnersatz und dem Zahnersatz und dem Grundkörper gewährleistet, um auf diese Weise das Auftreten schädlicher Kriechströme, die zu Korrosionen und Irrationen des Körpergewebes führen können, zu verhindern.

Das bekannte Implantat hat sich im Prinzip durchaus bewährt, allerdings hat es sich gezeigt, daß das Zwischenelement, welches nicht nur Lager- und Dämpfungsfunktion, sondern zugleich auch Befestigkungsfunktion für den Implantatpfosten hat, insbesondere unter Zugeinwirkung zu Ermüdungsbrüchen neigt; außerdem hat es sich gezeigt, daß das Ausmaß der Dämpfung möglichst einstellbar sein sollte, um auf diese Weise eine größere Flexibilität in unterschiedlichsten Anwendungsfällen zu gewährleisten.

Der Erfindung liegt die Aufgabe zugrunde, das enossale Implantat der gattungsgemäßen Art dahingehend weiterzubilden, daß die Gefahr von Ermüdungsbrüchen unter Zugeinwirkung behoben oder zumindest drastisch verhindert und darüber hinaus eine Einstellbarkeit der Dämpfungsfunktionen bei höheren Lagerpräzisionen des Zahnersatzes erreicht werden kann.

Erfindungsgemäß wird diese Aufgabe in Weiterbildung des gattungsgemäßen Implantats dadurch gelöst, daß die Distanzhülse aus Metall besteht und an ihrem dem Befestigungskopf für den Zahnersatz abgewandten Ende geschlossen und in den Grundkörper einschraubbar ausgebildet ist; daß das Zwischenelement in eine Erweiterung am offenen Ende der Distanzhülse einsetzbar und mit einer Ringschulter zur Anlage an den oberen Rand der Distanzhülse versehen ist; daß das Zwischenelement eine Innenbohrung aufweist, deren Durchmesser in einem dem Befestigungskopf für den Zahnersatz zugewandten und der Distanzhülse fernliegenden Bereich größer ist als der Außendurchmesser des Implantatpfostens; und daß der Implantatpfosten unter Andrücken einer dem Zwischenelement zugewandten Anlagefläche des Zahnersatzes an eine der Distanzhülse abgewandte Anlageschulter des Zwischenelementes in die Distanzhülse einschraubbar ist.

Dabei kann vorgesehen sein, daß die Einschraubtiefe des Implantatpfostens in die Distanzhülse einstellbar ist.

Auch schlägt die Erfindung gegebenenfalls vor, daß der Implantatpfosten in seinem mit dem Zahnersatz in Kontakt stehenden Bereich eine Kunststoffummantelung oder dergleichen aufweist.

Eine weitere Ausführungsform der Erfindung sieht vor, daß der Zahnersatz relativ zum Implantatpfosten in dessen Axialrichtung elastisch und/oder leicht verschieblich gelagert ist.

Dabei kann vorgesehen sein, daß zwischen dem Zahnersatz und dem Implantatpfosten ein Kunststoffring oder dergleichen angeordnet ist.

Alternativ hierzu kann auch vorgesehen sein, daß die elastische Lagerung des Zahnersatzes gegenüber dem Implantatpfosten durch entsprechende Ausbildung der Kunststoffummantelung des Kopfes des Implantatpfostens gewährleistet ist.

Die Erfindung schlägt weiterhin vor, daß die das Zwischenelement bündig aufnehmende Erweiterung der Distanzhülse sich in Richtung auf das offene Ende konisch erweiternd ausgebildet ist.

Auch kann der Erfindung vorgesehen sein, daß der Implantatpfosten mit einstellbarem Drehmoment in die Distanzhülse einschraubbar ist.

Eine weitere Ausführungsform der Erfindung ist dadurch gekennzeichnet, daß der Grundkörper und/oder der freiliegende Umfangsbereich der Distanzhülse mit Hydroxylapatit oder dergleichen beschichtet ist/sind.

Erfindungsgemäß kann weiterhin auch vorgesehen sein, daß der Implantatpfosten im Bereich seines Außengewindes am unteren Ende mit Klebstoff beschichtbar ist.

Die Erfindung sieht ferner auch vor, daß das Zwischenelement vollständig aus elastischem Material, wie Kunststoff, besteht; und daß die Innenbohrung des Zwischenelementes abgestufte Weite aufweist, wobei ihr Durchmesser in einem der Distanzhülse zugewandten Bereich dem Außendurchmesser des Implantatpfostens im wesentlichen entspricht und hieran in Richtung auf den Festigungskopf für den Zahnersatz der Bereich mit größerem Durchmesser als der Außendurchmesser des Implantatpfostens anschließt.

Der Erfindung, wie sie vorstehend beschrieben wurde, liegt die überraschende Erkenntnis zugrunde, daß es gelingt, die eingangs genannte Aufgabe in höchst eleganter und zufriedenstellender Weise zu lösen, indem das Zwischenelement, beim Stand der Technik als Innenhülse ausgebildet, nicht länger sowohl als Befestigungsteil für den Implantatpfosten als auch als elektrisch und mechanisch isolierendes bzw. dämpfendes Element dient, sondern daß die Federungs- bzw. Dämpfungswirkung von der Befestigungsfunktion gleichsam "abgespalten" wird: Der Implantatpfosten, aus Metall bestehend, gewährleistet im Zusammenwirken mit der ebenfalls aus Metall bestehenden Distanzhülse eine zuverlässige, präzise Befestigung des Zahnersatzes im Grundkörper. Die Dämpfungsfunktion hingegen wird durch das konzentrisch den Implantatpfosten umgebende Zwischenelement gewährleistet, wobei die Dämpfung in vertikaler Richtung über die Volumenelastizität des Zwischenelementes erfolgt, die durch Anziehen des Implantatpfostens mit unterschiedlichem Drehmoment veränderbar ist, während die Dämpfungswirkung in seitlicher Richtung durch den nach dem Schwingstabprinzip arbeitenden Implantatpfosten, der in einer entsprechend bereichsweise erweiterten Innenbohrung des Zwischenelementes sitzt, in Verbindung mit dem Material des Zwischenelementes erreicht wird. Bei einem Verschwenken des am Implantatpfosten sitzenden Zahnersatzes werden auf diese Weise Druck- und Zugkräfte, aber auch Biegemomente, auf das Zwischenelement ausgeübt. Die bei den bisherigen Implantaten möglicherweise auftretende Gefahr von Ermüdungsbrüchen unter Zugeinwirkung ist bei der Erfindung behoben.

Für das Zwischenelement läßt sich wie beim Stand der Technik Polyoxymethylen verwenden. Gegebenenfalls kann durch entsprechende Wahl des Materials des Implantatpfostens auch die Steifigkeit der Anordnung beeinflußt werden. Der Implantatpfosten kann darüber hinaus gegebenenfalls in seinem Einschraubbereich am unteren Ende mit Klebstoff beschichtet werden, so daß sich zusätzlich zur Einschraubwirkung in den Grundkörper eine gegen Lockerung sichernde Klebeverbindung ergibt, die aber natürlich bei kräftigem Herausdrehen wieder gelöst werden kann. Die Abstützung des Implantatpfostens im Zwischenelement kann natürlich in unterschiedlichen Höhen erfolgen, wobei nicht nur hierdurch, sondern auch durch Durchmesserveränderungen des Implantatpfostens die Steifigkeit beeinflußt werden kann.

Es hat sich gezeigt, daß bei den vorstehend beschriebenen Ausführungsformen des Implantates nach der Erfindung, bei denen das Zwischenelement gänzlich aus z. B. Kunststoff besteht und eine Innenbohrung abgestufter Weite aufweist, deren Durchmesser in einem der Distanzhülse zugewandten Bereich dem Außendurchmesser des Implantatpfostens im wesentlichen entspricht und in einem daran in Richtung auf den Befestigungskopf für Zahnersatz anschließenden oberen Bereich größer ist als der Außendurchmesser des Implantatpfostens, das Erzielen einer zufriedenstellenden vertikalen Elastizität und gleichzeitig einer befriedigenden horizontalen Elastizität noch nicht ganz zufriedenstellend gewährleistet ist.

Dies beruht darauf, daß zur Erzielung einer ausreichenden vertikalen Elastizität das Kunststoffmaterial, aus dem das einstückig ausgebildete Zwischenelement dabei besteht, verhältnismäßig weich sein sollte, wobei dann aber die seitliche Elastizität leicht zu groß wird, weil einer Schwenkbewegung des Implantatpfostens nach dem Schwingstabprinzip durch das Zwischenelement nicht hinreichend großer Widerstand entgegengesetzt wird. Insbesondere ist die seitliche Auslenkung des nach dem Schwingstabprinzip arbeitenden Implantatpfostens bei den vorstehend beschriebenen Ausführungsformen des Implantates nach der Erfindung nicht so zuverlässig begrenzt, wie dies eigentlich wünschenswert wäre, wenn der Implantatpfosten bei einer seitlichen Auslenkung an die Wandung der Innenbohrung des Zwischenelementes zur Anlage kommt, wenn dieses auch aus verhältnismäßig weichem Kunstoffmaterial hergestellt ist.

Um auf einfache Weise sowohl eine befriedigende vertikale Elastizität als auch gleichzeitig eine zufriedenstellende seitliche Elastizität mit zuverlässiger seitlicher Auslenkung des Implantatpfostens zu erzielen, schlägt die Erfindung daher weiterhin auch vor, daß das Zwischenelement einen den Implantatpfosten umgebenden Zwischenelementkern aus verhältnismäßig steifem Material und eine den Bereich der Ringschulter und/oder der Anlageschulter umfassende Zwischenelementhülle aus relativ weichem, elastischem Material aufweist.

Dabei kann vorgesehen sein, daß der Zwischenelementkern aus Hartkunststoff, wie Polyoxymethylen oder dergleichen, besteht.

Erfindungsgemäß kann weiterhin dadurch gekennzeichnet sein, daß der Zwischenelementkern aus Metall besteht.

Die Erfindung kann weiterhin dadurch gekennzeichnet sein, daß der Zwischenelementkern aus Titan besteht.

Es kann erfindungsgemäß auch vorgesehen sein, daß die Zwischenelementhülle aus Weichkunststoff, wie Polyurethan oder dergleichen, besteht.

Eine weitere Ausführungsform der Erfindung ist dadurch gekennzeichnet, daß der Zwischenelementkern hülsenartig ausgebildet ist und im Bereich der Ringschulter und der Anlageschulter einen Ringbund aufweist.

Es kann hierbei vorgesehen sein, daß die Zwischenelementhülle mit dem Zwischenelementkern formschlüssig verbunden ist.

Eine weitere Ausführungsform der Erfindung sieht vor, daß der Ringbund eine Hinterschneidung aufweist.

Nach der Erfindung kann auch vorgesehen sein, daß die Zwischenelementhülle im Spritzgußverfahren an den Zwischenelementkern angeformt ist.

Die Erfindung sieht weiterhin vor, daß die Innenbohrung des Zwischenkernelementes im Bereich der Ringschulter und der Anlageschulter einen Zentralbereich aufweist, in dem der Innendurchmesser der Innenbohrung dem Außendurchmesser des Implantatpfostens im wesentlichen entspricht.

Dabei kann vorgesehen sein, daß der Zentralbereich kleineren Innendurchmesser der Innenbohrung des Zwischenelementkerns von den Stirnflächen des Zwischenelements gleichen Abstand hat.

Alternativ hierzu kann erfindungsgemäß auch vorgesehen sein, daß der Zentralbereich kleineren Innendurchmessers der Innenbohrung des Zwischenelementkerns von den Stirnflächen des Zwischenelementes verschiedenen Abstand hat.

Dadurch, daß das Zwischenelement bei den vorstehend beschriebenen Ausführungsformen aus zwei unterschiedlichen Komponenten gebildet wird, nämlich einem Zwischenelementkern aus steifem, hartem Material, vorzugsweise z. B. aus Titan bestehend, und zum anderen aus einer diesen harten Kern zumindest bereichsweise umgebenden Zwischenelementhülle, die aus weichem, elastischem Kunststoff bestehen kann, gelingt es, einerseits die seitliche Auslenkung des Implantatpfostens zuverlässig durch den Zwischenelementkern zu begrenzen, so daß keine zu starken seitlichen Auslenkungen möglich sind, während gleichzeitig eine befriedigende Vertikalelastizität dadurch gewährleistet ist, daß im Bereich der Ringschulter und der Anlageschulter kompressibles, weiches, elastisches Kunststoffmaterial, wie Polyurethan, zur Aufnahme einer vertikalen Druckbeanspruchung zur Verfügung steht. In weiterer Verfolgung des Erfindungsgedankens, im Vergleich zum Stand der Technik die bis dahin vereinigten Funktionen des Befestigungsteiles für den Implantatpfosten einerseits und des elektrisch und mechanisch isolierenden bzw. dämpfenden Elementes andererseits aufzuspalten, schlägt die Erfindung also bei den zuletzt beschrieben Ausführungsformen vor, die beiden Federungs- bzw. Dämpfungsfunktionen des Zwischenelementes, nämlich die Vertikalelastizität einerseits und die Querelastizität andererseits, nochmals aufzuspalten, und zwar durch den zweikomponentigen Aufbau des Zwischenelementes aus hartem Zwischenelementkern und weicher Zwischenelementhülle.

Auch bei den zuletzt beschriebenen Ausführungsformen des Implantats nach der Erfindung kann die Innenbohrung des Zwischenelementes bereichsweise in ihrem Durchmesser so verkleinert sein, daß ihr Innendurchmesser im wesentlichen dem Außendurchmesser des Implantatpfostens entspricht, obwohl dies für die Funktion des Zwischenelementes nach der Erfindung nicht unbedingt notwendig ist. Sofern die Innenbohrung des Zwischenelementes bzw. des Zwischenelementkerns über dessen gesamte Längserstreckung einen größeren Durchmesser hat als der Außendurchmesser des Implantatpfostens, ist dieser innerhalb der Innenbohrung des Zwischenelementkerns begrenzt abbiegbar, wobei die Querauslenkung dann ihre Begrenzung findet, wenn der nach dem Schwingstabprinzip arbeitende Implantatpfosten am oberen Rand der Innenbohrung zur Anlage kommt. Die Erfindung sieht, wie dargelegt, auch vor, daß gegebenenfalls ein Zentralbereich der Innenbohrung dem Außendurchmesser des Implantatpfostens entspricht, wobei das Zwischenelement dann, wenn der Zentralbereich symmetrisch in der Längsmitte liegt, vollkommen symmetrisch aufgebaut ist und in beiden Richtungen eingebaut werden kann, wohingegen in dem Fall, daß der Zentralbereich bezüglich der Längsmitte des Zwischenelementes unsymmetrisch liegt, je nach Einbaurichtung des Zwischenelementes unterschiedliche seitliche Elastizität- und Dämpfungseigenschaften des Zwischenelementes erzielbar sind.

Weitere Merkmale und Vorteile der Erfindung ergeben sich aus der nachfolgenden Beschreibung, in der Ausführungsbeispiele anhand der schematischen Zeichnung im einzelnen erläutert sind. Dabei zeigt:
- Fig. 1: ein erstes Ausführungsbeispiel des enossalen Implantats nach der Erfindung im Längsschnitt durch die Längsmittelachse des Implantatpfostens;
- Fig. 2: ein weiteres Ausführungsbeispiel des enossalen Implantats;
- Fig. 3: ein gegenüber dem Implantat von Fig. 2 abgewandeltes Ausführungsbeispiel eines Zwischenelementes;
- Fig. 4: den Zwischenelementkern des Zwischenelementes von Fig. 3;
- Fig. 5: ein abgewandeltes Ausführungsbeispiel eines bei dem Implantat gemäß Ausführungsbeispiel von Fig. 2 verwendbaren Zwischenelementes; und
- Fig. 6: den Zwischenelementkern des Zwischenelementes von Fig. 5, wobei die Darstellungsweise wie in den Figuren 3, 4 und 5 einem Längsschnitt durch die Längsmittelachse des Zwischenelementes entspricht.

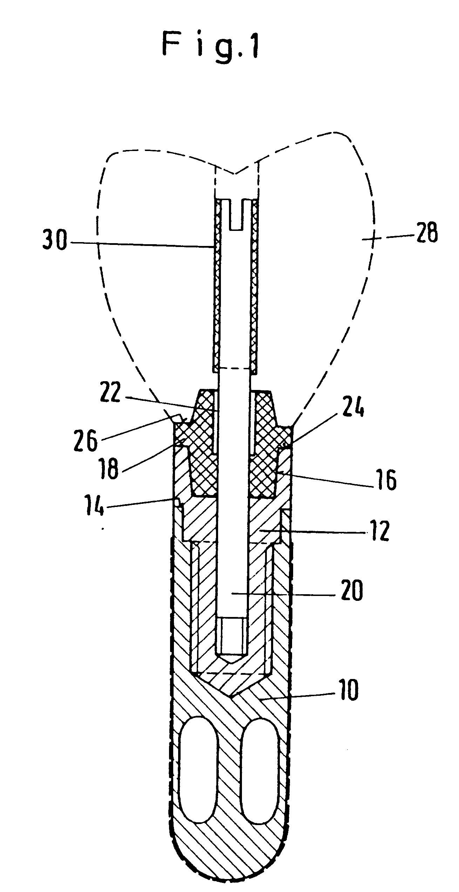

Wie Figur 1 zeigt, weist das Implantat bei dem wiedergebenen Ausführungsbeispiel einen Grundkörper 10 aus Titan auf, der an seiner mit dem Körpergewebe in Kontakt kommenden Außenfläche mit Hydroxylapatit beschichtet ist. In seiner Funktion einspricht dieser Grundkörper demjenigen des enossalen Implantats nach der EP-A-0 216 031, auf die zur weiteren Erläuterung der Wirkungsweise z. B. der Durchbrechungen des Grundkörpers 10 verwiesen wird. In den Grundkörper 10 ist eine Distanzhülse 12, ebenfalls aus Titan bestehend, eingeschraubt. Die Distanzhülse 12 liegt mit einer Schulter 14 am oberen Rand des Grundkörpers 10 in der aus der Zeichnung ersichtlichen Weise an. Sie ist an ihrem dem Grundkörper 10 zugewandten unteren Ende geschlossen ausgebildet und weist eine an ihrem unteren, geschlossenen Ende mit einem Innengewinde versehene Innenbohrung auf. Durch eine Erweiterung 16 am oberen Ende der Distanzhülse 12 ist ein Zentrierbund gebildet. Die mit dem Körpergewebe in Kontakt kommende Umgangsfläche der Distanzhülse 12 ist wie der Grundkörper 10 mit körpergewebefreundlichem Hydroxylapatit beschichtet. In die Erweiterung 16 der Distanzhülse 12 ist ein elastisches Zwischenelement 18 aus Polyoxymethylen eingesezt, dessen Innenbohrung im unteren, der Distanzhülse 12 zugewandten Bereich einen Innendurchmesser hat, der im wesentlichen dem Außendurchmesser eines aus Titan bestehenden Implantatpostens 20 entspricht, im oberen Bohrungsbereich jedoch im wesentlichen weiter ausgebildet ist als der Außendurchmesser des Implantatpfostens 20; letzterer weist im übrigen an seinem unteren, dem Grundkörper 10 zugewandten Ende ein Außengewinde auf, mittels dessen er in das entsprechende Innengewinde der Distanzhülse 12 einschraubbar ist. Das Zwischenelement 18 liegt am oberen Rand der Distanzhülse 12 mit einer Ringschulter 24 an. An einer der Ringschulter 24 gegenüberliegenden Anlageschulter 26 des Zwischenelementes liegt eine untere Anlagefläche eines Zahnersatzes 28 an , wobei der an seinem oberen Ende mit einer Kunststoffummantelung 30 versehene Implantatpfosten die Anlagefläche des Zahnersatzes 28 an die Anlageschulter 26 des elastischen Zwischenelementes 18 andrückt.

Wesentlich ist bei dem vorstehend beschriebenen Aufbau, daß der Implantatpfosten 20 die Innenbohrung des elastischen Zwischenelementes 18 in deren oberem Bereich 22 frei durchsetzt, also ohne Anliegen an der Innenwandung der Innenbohrung des Zwischenelementes 18, wobei je nach Einschraubtiefe des Implantatpfostens 20 bzw. je nach höhenmäßiger Ausbildung, in Axialrichtung des Implantatpfostens 20 gesehen, des oberen Bereiches 22 des elastischen Zwischenelementes 18 derjenige Höhenbereich, in dem der Implantatpfosten 20 das Zwischenelement 18 "frei" durchsetzt, einstellbar ist. Je nachdem, wie hoch der obere Abschnitt 22 des Zwischenelementes 18 ist, in welchem der Implantatpfosten 20 nicht an der Innenwandung der Bohrung des Zwischenelementes 18 anliegt, ist die Steifigkeit des durch den Implantatpfosten 20 gebildeten "Schwingstabes" größer oder kleiner. Der Zahnersatz 28 ist gegenüber dem Implantatpfosten 20 - die Länge des Implantatpfostens 20 kann in Anpassung an die jeweilige "Einbauhöhe" verändert werden - vertikal federnd bzw. leicht verschieblich gelagert, wobei dies entweder durch Zwischenschaltung eines entsprechenden Kunststoffringes oder aber durch entsprechende Ausbildung der Kunststoffummantelung 30 gewährleistet werden kann. Die Kunststoffummantelung 30 verhindert in jedem Fall einen elektrisch leitenden Kontakt zwischen dem Zahnersatz 28 und dem Implantatpfosten 20, so daß insgesamt gewährleistet ist, daß der Zahnersatz 28 gegenüber dem Grundkörper 10 elektrisch isoliert ist; hierdurch können schädliche Kriechströme, die zu Korrosion etc. führen können, ausgeschlossen werden. Der Zahnersatz 28 ist darüber hinaus gegen den Grundkörper 10 in allen Richtungen elastisch federnd gelagert, wobei dies einmal durch die beschriebene Schwingstabwirkung des Implantatpfostens 20 gewährleistet wird, zum anderen durch die in Axialrichtung des Implantatpfostens 20 gegenüber vertikalen Kräften wirkende elastische Dämpfung, die das Zwischenelement 18 hervorruft. Die dabei durch das Zwischenelement 18 gewährleistete Elastizität bzw. Dämpfung läßt sich durch Anziehen des Implantatpfostens 20 mit unterschiedlichen Drehmomenten noch variieren.

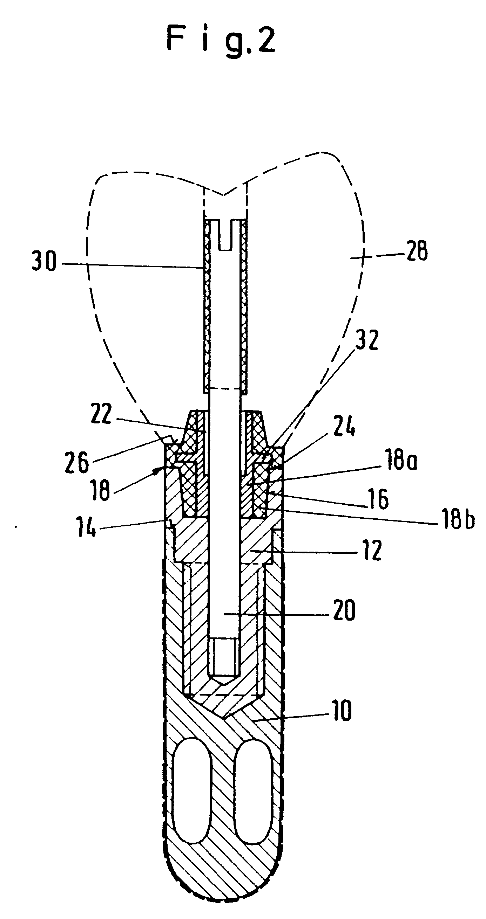

Wie Figur 2 zeigt, weist das Implantat bei dem dort wiedergegebenen Ausführungsbeispiel einen Grundkörper 10 aus Titan auf, der an seiner mit dem Körpergewebe in Kontakt kommenden Außenfläche mit Hydroxylapatit beschichtet ist. In seiner Funktion entspricht dieser Grundkörper demjenigen des enossalen Implantats nach der EP-A-0 216 031, auf die zur weiteren Erläuterung des Grundkörpers 10 verwiesen wird. In den Grundkörper 10 ist eine Distanzhülse 12, ebenfalls aus Titan bestehend, eingeschraubt. Die Distanzhülse 12 liegt mit einer Schulter 14 am oberen Rand des Grundkörpers 10 in der aus der Zeichnung ersichtlichen Weise an. Sie weist an ihrem dem Grundkörper 10 zugewandten unteren, geschlossenen Ende eine mit einem Innengewinde versehene Innenbohrung auf. Durch eine Erweiterung 16 am oberen Ende der Distanzhülse 12 ist ein Zentrierbund gebildet. Die mit dem Körpergewebe in Kontakt kommende Umfangsfläche der Distanzhülse 12 ist wie der Grundkörper 10 mit körpergewebefreundlichem Hydroxylapatit beschichtet.

In die Erweiterung 16 der Distanzhülse 12 ist ein elastisches Zwischenelement 18 eingesetzt, welches aus einem steifen, harten Zwischenelementkern 18a aus Titan und einer verhältnismäßig weichelastischen Zwischenelementhülle 18b aus Polyurethan besteht. Die Innenbohrung des Zwischenelementkerns 18a hat im unteren, der Distanzhülle 16 zugewandten Bereich einen Innendurchmesser, der im wesentlichen dem Außendurchmesser eines aus Titan bestehenden Implantatpfostens 16 entspricht, im oberen Bohrungsbereich jedoch im wesentlichen weiter ausgebildet ist als der Außendurchmesser des Implantatpfostens 20. Letzterer weist übrigens an seinem unteren, dem Grundkörper 10 zugewandten Ende ein Außengewinde auf, mittels dessen er in das entsprechende Innengewinde der Distanzhülse 12 einschraubbar ist. Das Zwischenelement 18 liegt am oberen Rand der Distanzhülse 12 mit einer Ringschulter 24 an. An einer der Ringschulter 24 gegenüberliegenden Anlageschulter 26 des Zwischenelementes liegt eine untere Anlagefläche eines Zahnersatzes 28 an, wobei der an seinem oberen Ende mit einer Kunststoffummantelung 30 versehene Implantatpfosten die Anlagefläche des Zahnersatzes 28 an die Anlageschulter 26 des elastischen Zwischenelementes 18 andrückt.

Bezüglich der Funktionsweise der insoweit beschriebenen Konstruktion, einschließlich der Vorteile des in Figur 2 gezeigten Ausführungsbeispieles wird auf die Beschreibung des Ausführungsbeispieles von Figur 1 Bezug genommen, soweit nicht der Aufbau des Zwischenelementes 18 aus Zwischenelementkern 18a und Zwischenelementhülle 18b betroffen ist. Bezüglich des Zwischenelementes 18 läßt Fig. 1 erkennen, daß der Zwischenelementkern 18a einen Ringbund 32 aufweist, der dazu dient, die vorzugsweise im Spritzgußverfahren hergestellte Zwischenelementhülle 18b fest an dem Zwischenelementkern 18a zu halten.

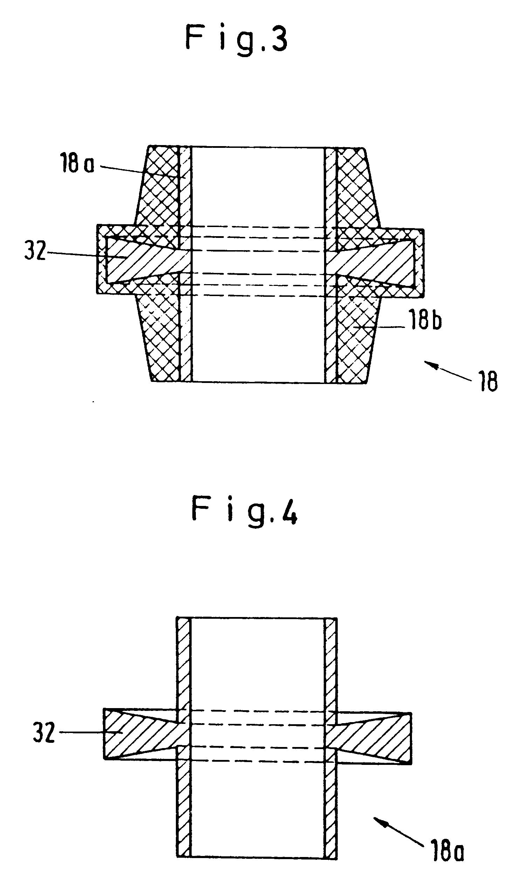

Beim Ausführungsbeispiel nach Fig. 3 weist das Zwischenelement 18 wiederum einen Zwischenelementkern 18a aus Titan auf, dessen Ringbund 32 hierbei so ausgebildet ist, daß eine Hinterschneidung entsteht, die von der im Spritzgußverfahren angebrachten Polyurethanhülle 18b hintergriffen wird. Genauer erkennt man den Aufbau des Zwischenelementkern 18a mit seinem Ringbund 32 und dessen Hinterschneidung in Fig. 4.

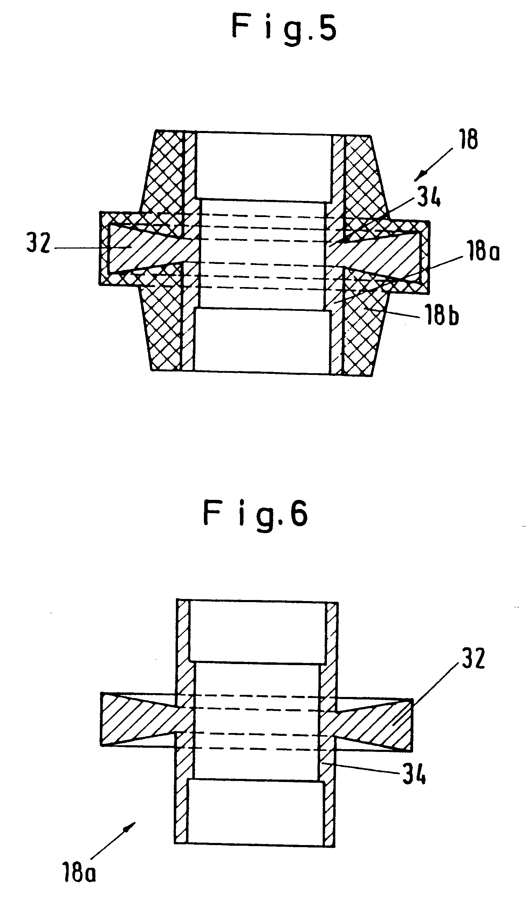

Das Ausführungsbespiel des Zwischenelementes gemäß Fig. 5 und 6 ist gegenüber demjenigen von Fig. 3 und 4 dadurch abgewandelt, daß der Zwischenelementkern 18a in seinem in Richtung der Längsmittelachse mittig gelegenen Zentralbereich 34 einen kleineren Innendurchmesser aufweist, der in diesem Bereich im wesentlichen dem Außendurchmesser des Implantatpfostens 20 (Fig. 2) entspricht. Der Zentralbereich 34 ist dabei von der oberen und unteren Stirnfläche, gemäß Zeichnung, gleich weit entfernt, wodurch erzielt wird, daß das Zwischenelement 18 in beiden Richtungen ohne Änderung der Horizontalelastizitätseigenschaften in das Implantat eingebaut werden kann. Natürlich ist auch eine Ausführungsform möglich, bei welcher der Zentralbereich 34 bezüglich der Längsmitte des Zwischenelementes 18 unsymmetrisch angeordnet ist, wobei sich dann je nach Einbaurichtung des Zwischenelementes 18 unterschiedliche Horizontalelastizitätseigenschaften ergeben.

Durch den beschriebenen Aufbau des Zwischenelementes 18, nämlich unterteilt in zwei Komponenten, den harten Zwischenelementkern 18a und die weichelastische Zwischenelementhülle 18b, wird erzielt, daß bei Vertikalbeanspruchung im Bereich der Ringschulter 24 und der Anlageschulter 26 verhältnismäßig weichelastisches Kunststoffmaterial zur Verfügung steht, wodurch eine befriedigende Vertikalverformung gewährleistet ist, während gleichzeitig das harte Material des Zwischenelementkerns 18a eine unerwünscht starke seitliche Auslenkung bei Querbeanspruchung durch Biegen des Implantatpfostens verhindert.

## Patentansprüche

1. Enossales Implantat mit einen Befestigungskopf und einen mit einem Grundkörper (10) verschraubbaren Implantatpfosten (20) aus Metall aufweisenden Befestigungseinrichtungen für einen festsitzenden, bedingt abnehmbaren Zahnersatz (28), mit einer mit einem Zentrierbund (16, 24) versehenen, in das offene Ende des Grundkörpers einsetzbaren und mit einer Schulter (14) an den oberen Rand des Grundkörpers (10) anlegbaren Distanzhülse (12) und einem den Implantatpfosten (20) bereichsweise konzentrisch umgebenden Zwischenelement (18) mit elastischem Material, wie Kunststoff, dadurch gekennzeichnet, daß die Distanzhülse (12) aus Metall besteht und an ihrem dem Befestigungskopf für den Zahnersatz (28) abgewandten Ende geschlossen und in den Grundkörper (10) einschraubbar ausgebildet ist; daß das Zwischenelement (18) in eine Erweiterung (16) am offenen Ende der Distanzhülse (12) einsetzbar und mit einer Ringschulter (24) zur Anlage an den oberen Rand der Distanzhülse versehen ist; daß das Zwischenelement (18) eine Innenbohrung aufweist, deren Durchmesser in einem dem Befestigungskopf für den Zahnersatz (28) zugewandten und der Distanzhülse (12) fernliegenden Bereich (22) größer ist als der Außendurchmesser des Implantatpfostens (20); und daß der Implantatpfosten (20) unter Andrücken einer dem Zwischenelement (18) zugewandten Anlagefläche des Zahnersatzes (28) an eine der Distanzhülse (12) abgewandte Anlageschulter (26) des Zwischenelementes (18) in die Distanzhülse einschraubbar ist.

2. Implantat nach Anspruch 1, dadurch gekennzeichnet, daß die Einschraubtiefe des Implantatpfostens (20) in die Distanzhülse (12) einstellbar ist.

3. Implantat nach Anspruch 1 oder 2, dadurch gekennzeichnet, daß der Implantatpfosten (20) in seinem mit dem Zahnersatz (28) in Kontakt stehenden Bereich eine Kunststoffummantelung (30) oder dergleichen aufweist.

4. Implantat nach einem der vorangehenden Ansprüche, dadurch gekennzeichnet, daß der Zahnersatz (28) relativ zum Implantatpfosten (20) in dessen Axialrichtung elastisch und/oder leicht verschieblich gelagert ist.

5. Implantat nach Anspruch 4, dadurch gekennzeichnet, daß zwischen dem Zahnersatz (28) und dem Implantatpfosten (20) ein Kunststoffring oder dergleichen angeordnet ist.

6. Implantat nach Anspruch 4 und Anspruch 2, dadurch gekennzeichnet, daß die elastische Lagerung des Zahnersatzes (28) gegenüber dem Implantatpfosten (20) durch entsprechende Ausbildung der Kunststoffummantelung (30) des Kopfes des Implantatpfostens (20) gewährleistet ist.

7. Implantat nach einem der vorangehenden Ansprüche, dadurch gekennzeichnet, daß die das Zwischenelement (18) bündig aufnehmende Erweiterung (16) der Distanzhülse (12) sich in Richtung auf das offene Ende konisch erweiternd ausgebildet ist.

8. Implantat nach einem der vorangehenden Ansprüche, dadurch gekennzeichnet, daß der Implantatpfosten (20) mit einstellbarem Drehmoment in die Distanzhülse (12) einschraubbar ist.

9. Implantat nach einem der vorangehenden Ansprüche, dadruch gekennzeichnet, daß der Grundkörper (10) und/oder der freiliegende Umfangsbereich der Distanzhülse (12) mit Hydroxylapatit oder dergleichen beschichtet ist/sind.

10. Implantat nach einem der vorangehenden Ansprüche, dadurch gekennzeichnet, daß der Implantatpfosten (20) im Bereich seines Außengewindes am unteren Ende mit Klebstoff beschichtbar ist.

11. Implantat nach einem der vorangehenden Ansprüche, dadurch gekennzeichnet, daß das Zwischenelement (18) vollständig aus elastischem Material, wie Kunststoff, besteht; und daß die Innenbohrung des Zwischenelementes (18) abgestufte Weite aufweist, wobei ihr Durchmesser in einem der Distanzhülse (12) zugewandten Bereich dem Außendurchmesser des Implantatpfostens (20) im wesentlichen entspricht und hieran in Richtung auf den Befestigungskopf für den Zahnersatz (28) der Bereich (22) mit größerem Durchmesser als der Außendurchmesser des Implantatpfostens (20) anschließt.

12. Implantat nach einem der Ansprüche 1 bis 10, dadurch gekennzeichnet, daß das Zwischenelement (18) einen den Implantatpfosten (20) umgebenden Zwischenelementkern (18a) aus verhältnismäßig steifem Material und eine den Bereich der Ringschulter (24) und/oder der Anlageschulter (26) umfassende Zwischenelementhülle (18b) aus relativ weichem, elastischem Material aufweist.

13. Implantat nach Anspruch 12, dadurch gekennzeichnet, daß der Zwischenelementkern (18) aus Hartkunststoff, wie Polyoxymethylen oder dergleichen, besteht.

14. Implantat nach Anspruch, dadurch gekennzeichnet, daß der Zwischenelementkern (18a) aus Metall besteht.

15. Implantat nach Anspruch 14, dadurch gekennzeichnet, daß der Zwischenelementkern (18a) aus Titan besteht.

16. Implantat nach einem der Ansprüche 12 bis 15, dadurch gekennzeichnet, daß die Zwischenelementhülle (18b) aus Weichkunststoff, wie Polyurethan oder dergleichen, besteht.

17. Implantat nach einem der Ansprüche 12 bis 16, dadurch gekennzeichnet, daß der Zwischenelementkern (18a) hülsenartig ausgebildet ist und im Bereich der Ringschulter (24) und der Anlageschulter (26) einen Ringbund (32) aufweist.

18. Implantat nach einem der Ansprüche 12 bis 17, dadurch gekennzeichnet, daß die Zwischenelementhülle (18b) mit dem Zwischenelementkern (18a) formschlüssig verbunden ist.

19. Implantat nach Anspruch 17 und 18, dadurch gekennzeichnet, daß der Ringbund (32) eine Hinterschneidung aufweist.

20. Implantat nach einem der Ansprüche 16 bis 19, dadurch gekennzeichnet, daß die Zwischenelementhülle (18b) im Spritzgußverfahren an den Zwischenelementkern (18a) angeformt ist.

21. Implantat nach einem der Ansprüche 12 bis 20 mit abgestufter Weite der Innenbohrung, dadurch gekennzeichnet, daß die Innenbohrung des Zwischenelementkerns (18a) im Bereich der Ringschulter (24) und der Anlageschulter (26) einen Zentralbereich (34) aufweist, in dem der Innendurchmesser der Innenbohrung dem Außendurchmesser des Implantatpfostens (20) im wesentlichen entspricht.

22. Implantat nach Anspruch 21, dadurch gekennzeichnet, daß der Zentralbereich (34) kleineren Innendurchmessers der Innenbohrung des Zwischenelementkerns (18a) von den Stirnflächen des Zwischenelements (18) gleichen Abstand hat.

23. Implantat nach Anspruch 21, dadurch gekennzeichnet, daß der Zentralbereich (34) kleineren Innendurchmessers der Innenbohrung des Zwischenelementkerns (18a) von den Stirnflächen des Zwischenelementes (18) verschiedenen Abstand hat.

## Claims

1. An endosseous implant comprising securing devices in the form of a head and a metal shank (20) screwable to a base member (10) for securing a stationary dental prosthesis (28) which is removable under certain conditions, and also comprising a spacer sleeve (12) provided with a centring collar (16, 24) and insertable into the open end of the base member and with a shoulder (14) for abutting the top edge of the base member (10), and also comprising an intermediate element (18) of resilient material such as plastics and concentrically surrounding parts of the shank (20), characterised in that the spacer sleeve (12) is made of metal and is closed at its end remote from the head for securing the dental prosthesis (28) and is screwable into the base member (10); the intermediate element (18) is insertable into a widened portion (16) at the open end of the spacer sleeve (12) and has an annular shoulder (24) for abutting the top edge of the spacer sleeve; the intermediate element (18) has an inner bore the diameter of which, in a region facing the head for securing the dental prosthesis (28) and remote from the spacer sleeve (12), is greater than the outer diameter of the shank (20); and the shank (20) is screwable into the spacer sleeve, when it presses an abutment surface of the dental prosthesis (28) facing the intermediate element (18) against an abutment shoulder (26) of the intermediate element (18) remote from the spacer sleeve (12).

2. An implant according to claim 1, characterised in that the depth to which the shank (20) is screwable into the spacer sleeve (12) is adjustable.

3. An implant according to claim 1 or 2, characterised in that the region of the shank (20) in contact with the dental prosthesis (28) comprises a plastics covering (30) or the like.

4. An implant according to any of the preceding claims, characterised in that the dental prosthesis (28) is mounted so as to be resilient and/or slightly movable relative to the shank (20) in the axial direction thereof.

5. An implant according to claim 4, characterised in that a plastics ring or the like is disposed between the dental prosthesis (28) and the shank (20).

6. An implant according to claim 4 and claim 2, characterised in that the resilient mounting of the dental prosthesis (28) relative to the shank (20) is obtained by suitably shaping the plastics covering (30) round the head of the shank (20).

7. An implant according to any of the preceding claims, characterised in that the wide part (16) of the spacer sleeve (12), which tightly receives the intermediate element (18), widens conically towards the open end.

8. An implant according to any of the preceding claims, characterised in that the shank (20) is screwable with adjustable torque into the spacer sleeve (12).

9. An implant according to any of the preceding claims, characterised in that the base member (10) and/or the exposed peripheral region of the spacer sleeve (12) is/are coated with hydroxyl apatite or the like.

10. An implant according to any of the preceding claims, characterised in that the outer thread of the shank (20) can be coated at the lower region with adhesive.

11. An implant according to any of the preceding claims, characterised in that the intermediate element (18) is made completely of resilient material such as plastics, and the inner bore of the intermediate element (18) has a stepped width, its diameter, in a region facing the spacer sleeve (12), being substantially equal to the outer diameter of the shank (20), and an adjacent region (22) in the direction of the head securing the dental prosthesis (28) has a diameter greater than the outer diameter of the shank (20).

12. An implant according to any of claims 1 to 10, characterised in that the intermediate element (18) comprises a core (18a) of relatively rigid material surrounding the shank (20) and a shell (18b) of relatively soft resilient material surrounding the region of the annular shoulder (24) and/or the abutment shoulder (26).

13. An implant according to claim 12, characterised in that the core (18) is made of hard plastics such as polyoxymethylene or the like.

14. An implant according to claim ..., characterised in that the core (18a) is made of metal.

15. An implant according to Claim 14, characterised in that the core (18a) is made of titanium.

16. An implant according to any of claims 12 to 15, characterised in that the shell (18b) is made of soft plastics such as polyurethane or the like.

17. An implant according to any of claims 12 to 16, characterised in that the core (18a) is in the form of a sleeve and has an annular collar (32) in the region of the annular shoulder (24) and the abutment shoulder (26).

18. An implant according to any of claims 12 to 17, characterised in that the shell (18b) is positively connected to the core (18a).

19. An implant according to claims 17 and 18, characterised in that the annular collar (32) has an undercut.

20. An implant according to any of claims 16 to 19, characterised in that the shell (18b) is integrally formed on the core (18a) by injection moulding.

21. An implant according to any one of claims 12 to 20 formed with an inner bore having a stepped width, characterised in that the inner bore of the core (18a), in the region of the annular shoulder (24) and the abutment shoulder (26), has a central region (34) in which the inner diameter of the inner bore is substantially equal to the outer diameter of the shank (20).

22. An implant according to claim 21, characterised in that the smaller inner-diameter central region (34) of the inner bore of the core (18a) is at the same distance from the end faces of the intermediate element (18).

23. An implant according to claim 21, characterised in that the smaller inner-diameter central region (34) of the inner bore of the core (18a) is at different distances from the end faces of the intermediate element (18).

## Revendications

1. Implant intra-osseux constitué de dispositifs de fixation d'une prothèse dentaire (28) montée à demeure et pouvant être enlevée dans certaines conditions, lesdits dispositifs de fixation comportant une tête de fixation et une tige d'implant (20) en métal pouvant être vissée avec un corps de base (10), d'une douille d'écartement (12) qui est munie d'une collerette de centrage (16, 24), qui est logée dans l'extrémité ouverte du corps de base et dont un épaulement (14) est appliqué contre le bord supérieur du corps de base (10), et d'un élément intermédiaire (18) en matériau élastique, tel que de la matière plastique, qui entoure partiellement la tige d'implant (20) de manière concentrique, caractérisé en ce que la douille d'écartement (12) est en métal, est fermée à son extrémité opposée à la tête de fixation de la prothèse dentaire (28) et se visse dans le corps de base (10) ; en ce que l'élément intermédiaire (18) est logé dans un élargissement (16) ménagé à l'extrémité ouverte de la douille d'écartement (12) et est muni d'un épaulement annulaire (24) destiné à être appliqué contre le bord supérieur de la douille d'écartement ; en ce que l'élément intermédiaire (18) comporte un perçage intérieur dont le diamètre est supérieur, dans la zone (22) tournée vers la tête de fixation de la prothèse dentaire (28) et éloignée de la douille d'écartement (12), au diamètre extérieur de la tige d'implant (20) ; et en ce que la tige d'implant (20) est vissée dans la douille d'écartement en appliquant une surface d'appui de la prothèse dentaire (28), ladite surface d'appui étant tournée vers l'élément intermédiaire (18), contre un épaulement d'appui (26) de l'élément intermédiaire (18), ledit épaulement d'appui (26) étant opposé à la douille d'écartement (12).

2. Implant selon la revendication 1, caractérisé en ce que la profondeur de vissage de la tige d'implant (20) dans la douille d'écartement (12) est réglable.

3. Implant selon la revendication 1 ou 2, caractérisé en ce que la tige d'implant (20) comporte, dans sa zone en contact avec la prothèse dentaire (28), une gaine en matière plastique (30) ou analogue.

4. Implant selon l'une des revendications précédentes, caractérisé en ce que la prothèse dentaire (28) est montée de façon élastique et/ou légèrement mobile par rapport à la tige d'implant (20), dans la direction axiale de cette dernière.

5. Implant selon la revendication 4, caractérisé en ce que, entre la prothèse dentaire (28) et la tige d'implant (20), est monté un anneau en matière plastique ou analogue.

6. Implant selon la revendication 4 et la revendication 2, caractérisé en ce que le montage élastique de la prothèse dentaire (28) par rapport à la tige d'implant (20) est garanti par une configuration correspondante de la gaine en matière plastique (30) de la tête de la tige d'implant (20).

7. Implant selon l'une des revendications précédentes, caractérisé en ce que l'élargissement (16) de la douille d'écartement (12) qui reçoit l'élément intermédiaire (18) de manière jointive s'élargit sous forme conique en direction de l'extrémité ouverte.

8. Implant selon l'une des revendications précédentes, caractérisé en ce que la tige d'implant (20) peut être vissée dans la douille d'écartement (12) avec un couple réglable.

9. Implant selon l'une des revendications précédentes, caractérisé en ce que le corps de base (10) et/ou la zone périphérique apparente de la douille d'écartement (12) sont revêtus d'hydroxylapatite ou analogue.

10. Implant selon l'une des revendications précédentes, caractérisé en ce que la tige d'implant (20) peut être enduite d'adhésif à son extrémité inférieure.

11. Implant selon l'une des revendications précédentes, caractérisé en ce que l'élément intermédiaire (18) est entièrement réalisé dans un matériau élastique, tel qu'une matière plastique, et en ce que le perçage intérieur de l'élément intermédiaire (18) présente une largeur étagée, son diamètre dans la zone tournée vers la douille d'écartement (12) correspondant sensiblement au diamètre extérieur de la tige d'implant (20) et étant prolongé, en direction de la tête de fixation de la prothèse dentaire (28), par une zone (22) possédant un diamètre supérieur au diamètre extérieur de la tige d'implant (20).

12. Implant selon l'une des revendications 1 à 10, caractérisé en ce que l'élément intermédiaire (18) comporte une âme (18a) en matériau relativement rigide, qui entoure la tige d'implant (20), et un manchon (18b) en matériau élastique relativement souple et élastique qui englobe la zone de l'épaulement annulaire (24) et/ou de l'épaulement d'appui (26).

13. Implant selon la revendication 12, caractérisé en ce que l'âme (18) de l'élément intermédiaire est réalisée en matière plastique dure, comme le polyoxyméthylène ou analogue.

14. Implant selon la revendication 13, caractérisé en ce que l'âme (18a) de l'élément intermédiaire est réalisée en métal.

15. Implant selon la revendication 14, caractérisé en ce que l'âme (18a) de l'élément intermédiaire est réalisée en titane.

16. Implant selon l'une des revendications 12 à 15, caractérisé en ce que le manchon (18b) de l'élément intermédiaire est réalisé en matière plastique souple, comme le polyuréthane ou analogue.

17. Implant selon l'une des revendications 12 à 16, caractérisé en ce que l'âme (18a) de l'élément intermédiaire est conçue sous la forme d'une douille et comporte un collet annulaire (32) dans la zone de l'épaulement annulaire (24) et de l'épaulement d'appui (26).

18. Implant selon l'une des revendications 12 à 17, caractérisé en ce que le manchon (18b) de l'élément intermédiaire est solidarisé par sa forme à l'âme (18a) de l'élément intermédiaire.

19. Implant selon la revendication 17 et 18, caractérisé en ce que le collet annulaire (32) comporte un décrochement.

20. Implant selon l'une des revendications 16 à 19, caractérisé en ce que le manchon (18b) de l'élément intermédiaire est moulé sur l'âme (18a) de l'élément intermédiaire par un procédé de moulage par injection.

21. Implant selon l'une des revendications 12 à 20, possédant un perçage intérieur avec une largeur étagée, caractérisé en ce que le perçage intérieur de l'âme (18a) de l'élément intermédiaire comporte, dans la zone de l'épaulement annulaire (24) et de l'épaulement d'appui (26), une zone centrale (34) où le diamètre intérieur du perçage intérieur correspond sensiblement au diamètre extérieur de la tige d'implant (20).

22. Implant selon la revendication 21, caractérisé en ce que la zone centrale (34) de plus petit diamètre du perçage intérieur de l'âme (18a) de l'élément intermédiaire est équidistante des faces frontales de l'élément intermédiaire (18).

23. Implant selon la revendication 21, caractérisé en ce que la zone centrale (34) de plus petit diamètre du perçage intérieur de l'âme (18a) de l'élément intermédiaire n'est pas équidistante des faces frontales de l'élément intermédiaire (18).
